# EUROPÄISCHE PATENTANMELDUNG

(11) **EP 2 445 232 A1**
(43) Veröffentlichungstag der Anmeldung: **25.04.2012**
(21) Anmeldenummer: 11185924.5
(22) Anmeldetag: 20.10.2011
(51) Int. Cl.: H04R 27/00, H05B 37/02

(54) **Verfahren und Anordnung zur Optimierung der Raumparameter Beschallung, Beleuchtung und Klimatisierung**

(30) Priorität: 20.10.2010 DE 102010049204
(71) Anmelder: G. Fleischhauer Ingenieur-Büro Cottbus GmbH, 03044 Cottbus (DE)
(72) Erfinder: Noack, Diego, 03116 Drebkau (DE)
(74) Vertreter: Gulde Hengelhaupt Ziebig & Schneider

(57) **Zusammenfassung**

Die Erfindung betrifft ein Verfahren und eine Anordnung zur Optimierung der Parameter Beschallung, Beleuchtung und Klimatisierung eines Raumes nach qualitativen und quantitativen Kriterien.
Gemäß dem Verfahren wird innerhalb eines definierbaren Zeitraumes ermittelt, wie viel Personen an welchem Ort des Raumes anwesend sind und entsprechend dem ermittelten Ergebnis die Beschallung, die Beleuchtung und die Klimatisierung des Raumes im Sinne von akustischer Qualität und Energieeinsparung bei der Beschallung und von Energieeinsparung bei der Beleuchtung und Klimatisierung in optimaler Weise mittels entsprechender Steuersignale eingestellt.
Die Anordnung besteht aus den Modulen Erfassungsmodul, Steuereinheit und Lautsprechersystem.

## Beschreibung

Die Erfindung betrifft ein Verfahren und eine Anordnung zur Optimierung der Parameter Beschallung, Klimatisierung und Beleuchtung eines Raumes nach qualitativen und quantitativen Kriterien.

Professionelle Beschallungsanlagen werden heute in vielfältigen Bereichen eingesetzt. Das Spektrum reicht von Vortragssälen, Hörsälen, Unterrichts- und Konferenzräumen, Restaurants und Hotels, Museen, Geschäftslokalen, Bahnhöfe und sonstige öffentlichen Gebäude, Sport- und Mehrzweckhallen, Stadien bis hin zu Bühnen und Theatern und Tonstudios.
Für eine professionelle Beschallungsanlage reicht es heute nicht mehr aus, einfach nur "laut" zu sein. Die Erkenntnisse der Psychoakustik haben dazu geführt, dass nicht nur hohe Tonqualität und beste Sprachverständlichkeit gefordert werden, die Anlage muss darüber hinaus angenehm klingen und darf nicht lästig erscheinen. An die akustische Funktionalität werden heute in jedem Nutzungsbereich hohe Anforderungen gestellt.

Die Akustik ist eine relativ junge Wissenschaft. In der Bauzeit alter Säle und Kirchen waren die wesentlichen raumakustischen Faktoren noch unbekannt. Das heißt, man konnte sich vor dem Jahre 1900 mangels Kenntnis theoretischer Grundlagen nicht bewusst um den Aspekt einer beeinflussbaren Beschallung von Räumen kümmern. Die akustischen Eigenheiten der Säle ergaben sich quasi automatisch aus dem jeweiligen Baustil. Erst im Jahre 1900 wurde die Boston Symphony Hall als erster, akustisch bewusst geplanter Konzertsaal gebaut. Die akustische Größe eines Raumes muss man immer im Zusammenhang mit der Wellenlänge von Tönen sehen, mit denen der Raum beschallt wird. Man kann die akustische Situation in einem Raum in Abhängigkeit von der Frequenz und der Zeit mit Hilfe der wellentheoretischen, der geometrischen und der statistischen Raumakustik beschreiben.
In einem Reflexions- und Schallverteilungs-Bereich dominieren diskrete Reflexionen, die die Schallverteilung im Raum und damit auch den Höreindruck bestimmen. Diskrete Reflexionen werden entweder als Stakkato-Effekt oder als Echo wahrgenommen, wenn die Verzögerungszeit größer als 15ms ist, oder in Kombination mit dem Direktschall als Lautheitsverstärkung.

Beim Beschreiben des Nachhalls im diffusen Schallfeld und der Berechnung der Nachhallzeit wird die Summe aller Schallreflexionen im Raum statistisch betrachtet. Eine Schallquelle "füllt" den Raum mit Schallenergie, die dann infolge der Schallabsorption im Raum abklingt. Die Abklingkurve ist für den jeweiligen Raum typisch.

Beschallungsanlagen, auch Public Address, kurz PA, genannt, sind elektrische Anlagen, die Tonsignale aus Mikrofonen, elektronischen oder elektromechanischen Musikinstrumenten oder Aufzeichnungsgeräten verstärken und mittels Lautsprechern der menschlichen Wahrnehmung zugänglich machen. Dabei werden grundsätzlich zwei Arten unterschieden:
- Die PA-Anlage ist für die Veranstaltungstechnik wie Disco-, Live- oder Konzertbeschallung, häufig auch für den mobilen Einsatz ausgelegt, wobei PA hier für Public Address steht.
- Die ELA (Elektroakustische Anlage oder Elektrische Lautsprecheranlage) ist eine fest installierte Anlage für die flächendeckende Beschallung von Räumen, Sportanlagen und auch Außenflächen.

Im Rahmen dieser Anmeldung geht es erstrangig um fest installierte Anlagen zur Beschallung großer Räume, wie Versammlungs- oder Hörsäle. Die Beschallungsanlage dient der Wiedergabe und Verstärkung von Sprache oder Musik. Sie besteht aus Lautsprechern und Verstärkern. Oft werden auch das steuernde Mischpult und die zugehörigen Effektgeräte der Anlage zugerechnet. Beschallungsanlagen werden überall dort eingesetzt, wo es nötig ist, große Flächen möglichst gleichmäßig zu beschallen.

Die Aufgabe der Beschallungsanlage ist es, Sprach- oder Musikinformation an ein Publikum zu übertragen. Da Lautsprecher abhängig von der zu übertragenden Frequenz unterschiedliche Abstrahlcharakteristiken haben und Schall, wie oben beschrieben, abhängig von der Frequenz verschieden gebrochen wird, können Beschallungssysteme, zumindest wenn nicht nur Sprache abgestrahlt werden soll, mit Basslautsprechern und/oder Mittel/Hochtonlautsprechern ausgestattet sein. Zusätzlich besteht die Möglichkeit, noch Subwoofer hinzuzufügen. Dimensionierung und Aufbau der Beschallungssysteme werden demnach an die Anforderungen des Veranstaltungsortes angepasst. An das Beschallungssystem kann sich die so genannte Backline anschließen, die in der Regel von den auftretenden Rednern/Musikern selbst mitgebracht wird und auf deren individuelle Bedürfnisse abgestimmt ist. Im Unterschied zum Beschallungssystem kann die Backline zwischen den aufeinander folgenden Auftritten mehrerer Darbieter leicht getauscht werden.
Die Anzahl der Lautsprecher ist prinzipiell offen. In großen Räumen können 40 und mehr Lautsprecher eingesetzt werden.

Um in Räumen zeitige Reflexionen und Nachhall zu reduzieren, werden Lautsprecherarrays (meistens vertikal orientiert), Lautsprechercluster (meistens horizontal orientiert), Waveguides bzw. Hornlautsprecher sowie laufzeitverzögerte Stützlautsprecher eingesetzt. Wichtig beim letzten Punkt ist die Beachtung von Haas-Effekt, Trading sowie Laufzeit- und Pegeldifferenz.
Obwohl sich die Anforderungen von denen an eine HiFi-Anlage unterscheiden, erreichen einige Beschallungssysteme, insbesondere Anlagen für Opern, Konzertsäle und Filmtheater, durchaus die Wiedergabequalität von HiFi- oder Studiosystemen. Der Gesamtklang einer Beschallungsanlage ist aber wegen der Vielzahl der möglichen Einstellung nicht unerheblich von den Fähigkeiten des Bedieners und der genutzten Messtechnik abhängig.
Folgende Forderungen sollen prinzipiell von professioneller Beschallung erfüllt werden:
- Ein möglichst breites Frequenzspektrum im gesamten Raum,
- geringste Verzerrungen auch bei hohen Schalldruckpegeln,
- ausreichende Leistungsreserven für dynamische Wiedergabe,
- die Berücksichtigung von Signallaufzeiten,
- der Haas-Effekt,
- eine gleichmäßige Schalldruckverteilung im Raum,
- ein hoher Störabstand,
- eine bestmögliche Sprachverständlichkeit,
- eine geringe Neigung zu akustischen Rückkopplungen.

Damit diese Forderungen erfüllbar werden, sind eine genaue Planung der Konfiguration der Anlage und eine sorgfältige Auswahl der Komponenten erforderlich. Ohne entsprechende Simulations-Programme und entsprechender Messgeräte ist eine wirklich gute Anlage heute nicht mehr realisierbar. Der Anspruch professioneller Beschallungsanlagen ist es, den Verwendungszweck
der Installationsanforderungen bestmöglich umzusetzen. Wichtige Einflussfaktoren von derzeitigen Standardinstallationen sind:
- Die Raumakustik (z.B. Nachhallzeit),
- das Nutzungsprofil der Anlage (Sprache, Musik, Kino),
- das vorhandene Budget,
- die architektonischen Gegebenheiten, architektonischen Gegebenheiten,
- die Art der Eingangssignale.

Aus diesen Einflussfaktoren kann heute mittels Simulationssoftwareprogrammen eine entsprechende Beschallungsanlage simuliert werden. Diese gibt Aufschluss über:
- die Art der zu verwendenden Lautsprecher,
- die Anordnung der Lautsprecher
- die Einstellparameter der Anlage, wie Delayzeiten, Frequenztrennung,
- den Lautstärkepegel.

Wird so vorgegangen, dann entsteht in den meisten Fällen eine Anlage die so konzipiert ist, dass der ungünstigste oder der Standardanwendungsfall mit ordentlichen Ergebnissen abgedeckt werden kann. Die Anlage wird also auf ein bestimmtes Szenario eingemessen und übergeben. Dennoch kam eine Studie der "Eidgenössische Materialprüfungs- und Forschungsanstalt EMPA" in der Schweiz bei der Untersuchung verschiedener Hörsäle und Unterrichtsräume zu folgendem Ergebnis: "Im Sinne einer groben Schätzung können mehr als die Hälfte der in der Schweiz in Hörsälen und anderen Unterrichtsräumen installierten Beschallungsanlagen als ungenügend bezeichnet werden."
Ursachen für die mangelnde Ausführung der Anlagen sind laut Studie der EMPA folgende, durchaus nicht seltene handwerkliche Fehler bei der Projektierung wie:
- Kein Pflichtenheft,
- konzeptionelle Mängel,
- nicht geeignete Lautsprecher (Richtcharakteristik),
- falsche Position und/oder Ausrichtung der Lautsprecher,
- falscher Frequenzgang,
- Optimierung auf Musik statt Sprache,
- fehlende Zeitkohärenz bei mehreren Lautsprechern,
- ungenügende Übersteuerfestigkeit von Mikrofoneingängen,
- zu kompliziertes elektronisches Layout,
- eine für Laien zu komplizierte Anlage,
- raumakustische Probleme.

Diese Erkenntnis deckt sich mit den Erfahrungen des Anmelders als langjähriger Entwicklung-, Projektierungs- und Installationsbetrieb für professionelle akustische Anlagen bei entsprechenden Installationen. Beschallungsanlagen, die auf Standardanwendungen ausgelegt sind, können in abweichenden Anwendungsfällen sehr problematisch sein. Häufig gibt es Mängel im Betrieb, wie nicht ausreichende Verständlichkeit (Hörsaal) oder in der Klangqualität, z.B. bei musikalischen Auftritten in der Aula oder Hörsaal, d.h. bei vom geplanten Standard abweichender Nutzung. Oder in gut eingemessenen Sälen ist trotzdem entweder der Vortrag schlecht zu verstehen oder Musik klingt nicht wie erwartet.
Neben den genannten Projektierungsmängeln, kommt nach Erfahrungen des Anmelders noch hinzu, dass selbst sorgfältig nach Standardanwendungen geplante und eingemessene Anlagen Veränderungen akustischer Bedingungen, die sich durch im Rahmen der üblichen Nutzung ändernde Einflussfaktoren auf die Raumakustik ergeben, nicht berücksichtigen können.

So haben anwesende Personen im Raum einen großen Einfluss auf die Raumakustik. Sie absorbieren Schall. Jeder Hörsaal, jeder Schulungsraum, jedes Kino und jeder Veranstaltungssaal stellt je nach Belegung veränderte Ansprüche an die Beschallungsanlage. Eine Einmessung auf eine Standardanwendung oder auf den ungünstigsten Fall stellt in der Regel nur einen Kompromiss dar.

Folgendes Beispiel soll diesen Zusammenhang verdeutlichen: In einem großen Hörsaal müssen entsprechend der akustischen Parameter mehrere Lautsprecher installiert werden, um diesen mit gleichmäßigem Pegel zu beschallen. Hierfür werden mehrere so genannte Delaylines installiert. Ist der Hörsaal voll belegt, dann macht es Sinn alle Lautsprecher anzusprechen.

Auf eine derartige Standardanwendung einer optimalen akustischen Ausschöpfung des gesamten zu beschallenden Raumes beziehen sich bekannte Lösungen, wie sie beispielsweise in den Schriften DE 297 24 831 U1 und AT 345 363 beschrieben sind. Ist jedoch der oben genannte Hörsaal nur zur Hälfte belegt und die Sitzverteilung der Studenten so, dass hauptsächlich nur die vordere Hälfte des Hörsaals belegt ist, schallen die hinteren Lautsprecher ins Leere. Die Folge ist, dass der hintere Raum die Schallwellen in erhöhtem Maße reflektiert und somit zu einer Verschlechterung der Gesamtakustik, und damit zur Verschlechterung der Verständlichkeit eines Vortragenden, führt.

Betreffend die Raumparameter Beleuchtung und Klimatisierung des betreffenden Raumes ist die bekannte Vorgehensweise derart, dass der gesamte Raum, z.B. ein Hörsaal, vollständig beheizt und vollständig ausgeleuchtet wird. Das bedeutet einen über das erforderliche Maß hinausgehenden hohen Energieeinsatz.
Ausgehend von dieser Problematik lag der Erfindung die Aufgabe zugrunde, ein Verfahren und eine Anordnung zur Optimierung der Raumparameter nach qualitativen und quantitativen Kriterien zu schaffen, wobei unter Raumparameter die Klimatisierung, die Beleuchtung und insbesondere die Beschallung eines Raumes zu verstehen ist. Es war ein auf veränderliche akustische Einflussfaktoren flexibel reagierendes digitales Beschallungssystem vorrangig für Hörsäle und andere multifunktional nutzbare große Säle sowie Museen zu schaffen, das sich der Raumbelegung und dem Grundpegel fortwährend anpasst, bei dem im Ergebnis eine automatische dynamische Anpassung der akustischen Parameter an sich ändernde akustische Bedingungen erfolgt. Gleichzeitig soll die Klimatisierung und Beleuchtung entsprechend der Belegung des betreffenden Raumes erfolgen.

Betreffend die akustische Optimierung werden Im Einzelnen folgende Entwicklungsziele, d.h. Produkteigenschaften für den Anwender, angestrebt:
- Die Beschallungsanlage soll für gängige Räume und Anwendungsfälle die übliche Funktionalität besitzen, wie weitgehende Ausstattungsmöglichkeit mit Standardkomponenten nach dem Baukastenprinzip mit heute üblichen Gerätesystemen, wie Konferenzanlage, Dolmetschersystem, Mikrofonen, hochwertigen Lautsprechersystemen, Steuersystem mit Encoder für Streamingformate, Mediensteuerungen, digitalen Soundprozessoren,
- Erweiterungsmöglichkeit für weitere akustische Systeme,
- punktgenaue Beschallung und Ausrichtung der Beschallungsanlage auf die Hörenden,
- erstmalige Ansteuerung des flexiblen Beschallungssystems und anderer Funktionen über ein interaktives Multitouchsystem,
- erstmalige Ansteuerung des flexiblen Beschallungssystems und anderer Funktionen über ein interaktives Multitouchsystem,
- automatisierte Anpassung der akustischen Parameter in Echtzeit an sich unter üblichen Nutzungsbedingungen ändernde akustisch relevante Einflussfaktoren, wie die Raumbelegung und zwar in Anzahl der Personen (Quantität) und Lokalisierung der Personen (Qualität) und Nutzungsart, z.B. Sprachvortrag, Konzert, Gesang usw.,
- automatisierte einfache Bedienung der Steuerung der Beschallung,
- Erleichterung der Arbeit für den Tontechniker, evtl. Einsparung des Tontechnikers,
- Integrierbarkeit der neuen Beschallungsanlage in bestehende Anlagen und Kompatibilität mit allen gängigen Beschallungssystemen,
- Senkung des Verschleißes der Anlagenkomponenten und Senkung des Energieverbrauchs, d.h. kein Betrieb von nicht benötigten Lautsprecher und anderen Komponenten,
- Vermeidung von Schallreflexionen ins Leere (erhöht die Klangqualität und Verständlichkeit).

Gemäß dem erfindungsgemäßen Verfahren wird innerhalb eines definierbaren Zeitraumes ermittelt, wie viel Personen an welchem Ort des Raumes anwesend sind und entsprechend dem ermittelten Ergebnis die Beschallung, die Beleuchtung und die Klimatisierung des Raumes im Sinne von akustischer Qualität und Energieeinsparung bei der Beschallung und von Energieeinsparung bei der Beleuchtung und Klimatisierung in optimaler Weise mittels entsprechender Steuersignale eingestellt.

In zweckmäßiger Weise erfolgt die Ermittlung der Belegung des Raumes mittels Bilderfassung digitaler oder digitalisierter Signale. Dabei wird vorzugsweise ein von einer digitalen Kamera, beispielsweise einer Infrarot-Kamera, in zeitlichen Abständen aufgenommenes Bild des besetzten Raumes mit einem Referenzbild des unbesetzten Raumes verglichen. Durch bilddatenverarbeitungstechnische Algorithmen, wie Differenzbildung, Edge-Detection, Schwellwertberechnung und verschiedene Kontrastfilter werden die Unterschiede zwischen diesen Bildern und dem Referenzbild isoliert, wobei der Raum selbst durch ein Raster in Zonen eingeteilt ist. Der Schwerpunkt der isolierten Veränderung, so genannte Blobs, werden berechnet und einer Zone zugeordnet sowie für jede Zone oder für Zonenkombinationen bestimmte Steuerbefehle generiert und an Steuergeräte zur optimalen Einstellung der Beschallung, der Beleuchtung sowie der Klimatisierung des Raumes gesendet.

Durch Schallpegelmessung kann ermittelt werden, wie die ermittelte Belegung auf die Beschallung wirkt. Entsprechend dieser Erfassung wird ein entsprechendes in der Anlage abgelegtes Preset, d.h. ein voreingestelltes akustisches Profil, ausgelöst. Dieses Preset spricht nur die erforderlichen Lautsprecher mit den erforderlichen Eingangsparametern an.
Die Anordnung zur Durchführung des Verfahrens besteht aus den folgenden Modulen:
- Erfassungsmodul bestehend aus Messmikrofon als Pegel messer und Kamera zur Bilderfassung, evtl. ergänzt durch ein Messmikrofon als Pegelmesser,
- Steuereinheit mit den Untermodulen Signalaufbereitungsmodul, digitaler Controler und Bedienmodul,
- Lautsprechersystem mit aktiven und passiven Lautsprechersystemen, Line Arrays und voll elektronischen und manuell einzustellenden Beam Steering Systemen.

Durch die anmeldungsgemäße Lösung wird die Gesamtakustik im Raum optimiert, d.h. die Sprach- oder Musikverständlichkeit werden wesentlich verbessert. Das Herunterfahren nicht benutzter Ressourcen sowie analog die automatischer Auslösung von Energiesparprofilen am Computer über die Presets erfolgt eine Senkung von Verschleiß und Energieverbrauch. Ebenso werden die Beleuchtung und die Klimatisierung des Raumes entsprechend der Belegung des Raumes optimal eingestellt, was zu einer verbesserten Funktionalität und einer wesentlichen Energieeinsparung beiträgt.

Ein Ausführungsbeispiel der erfindungsgemäßen Lösung ist in den Figuren der Zeichnung dargestellt. In der Zeichnung zeigen:
- Figur 1:: ein Blockschaltbild der Anordnung zur Optimierung der Raumparameter;

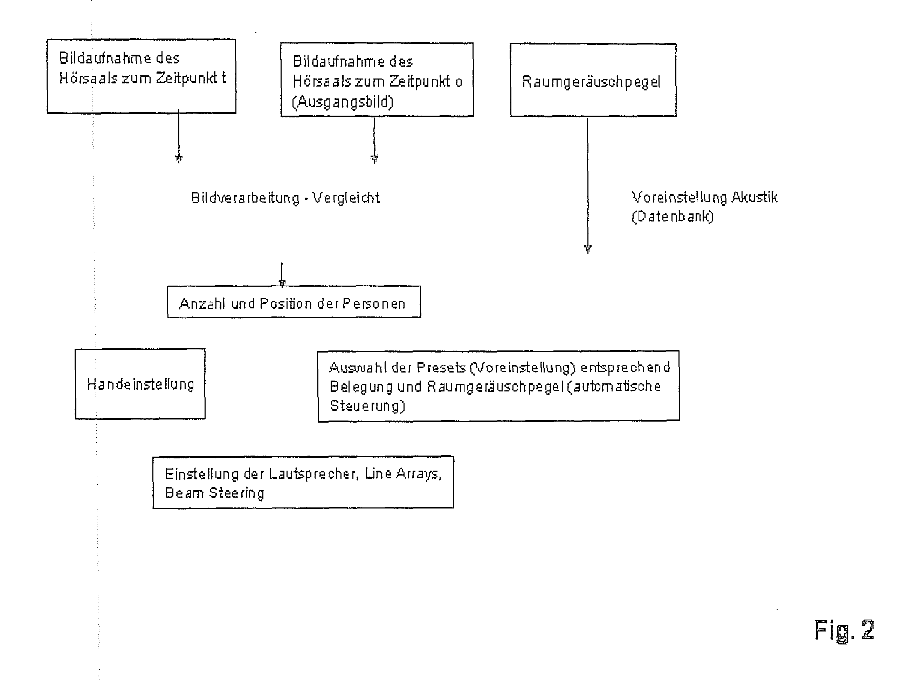

- Figur 2:: schematisch den Funktionsablauf des Verfahrens zur Optimierung der Raumparameter,

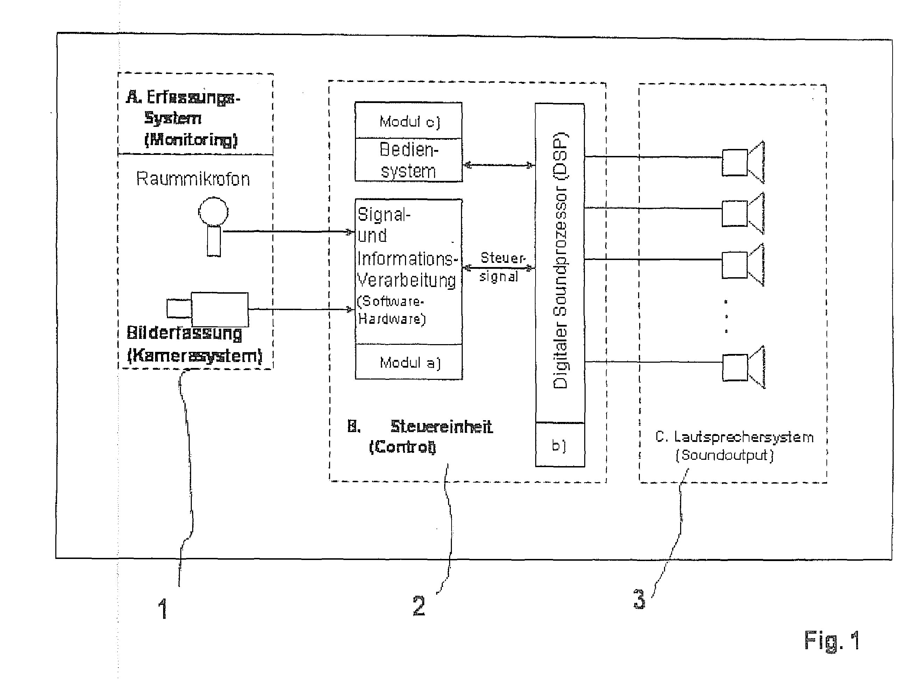

Entsprechend Figur 1 besteht die Anordnung zur Durchführung des Verfahrens aus den folgenden Modulen:
- Erfassungsmodul (1), bestehend aus Messmikrofon als Pegelmesser und Kamera zur Bilderfassung,
- Steuereinheit (2) mit den Untermodulen Signalaufbereitungsmodul, digitalem Controler und Bedienmodul,
- Lautsprechersystem (3) mit aktiven und passiven Lautsprechersystemen, Line Arrays und voll elektronischen und manuell einzustellenden Beam Steering Systemen.und voll elektronischen und manuell einzustellenden Beam Steering Systemen.

In analoger Weise sind die Ansteuerungen der Beleuchtung und der Klimatisierung aufgebaut.

## Patentansprüche

1. Verfahren zur Optimierung der Parameter Beschallung, Beleuchtung und Klimatisierung eines Raumes nach qualitativen und quantitativen Kriterien, **dadurch gekennzeichnet, dass** innerhalb eines definierbaren Zeitraumes ermittelt wird, wie viel Personen an welchem Ort des Raumes anwesend sind und dass entsprechend dem ermittelten Ergebnis die Beschallung, die Beleuchtung und die Klimatisierung des Raumes im Sinne von akustischer Qualität und Energieeinsparung bei der Beschallung und von Energieeinsparung bei der Beleuchtung und Klimatisierung in optimaler Weise mittels entsprechender Steuersignale eingestellt wird.

2. Verfahren nach Anspruch 1, **dadurch gekennzeichnet, dass** die Ermittlung der Belegung des Raumes durch Erfassung digitaler oder digitalisierter Signale, beispielsweise durch Infrarotbilderfassung erfolgt.

3. Verfahren nach Anspruch 2, **dadurch gekennzeichnet, dass** zur Ermittlung der Raumbelegung ein von einer Infrarot-Kamera in zeitlichen Abständen aufgenommenes Bild des besetzten Raumes mit einem Referenzbild des unbesetzten Raumes verglichen wird, dass durch bilddatenverarbeitungstechnische Algorithmen, wie Differenzbildung, Edge-Detection, Schwellwertberechnung und verschiedene Kontrastfilter, die Unterschiede zwischen diesen Bildern und dem Referenzbild isoliert werden, wobei der Raum selbst durch ein Raster in Zonen eingeteilt, der Schwerpunkt der isolierten Veränderung, so genannte Blobs, berechnet und einer Zone zugeordnet werden und für jede Zone bestimmte Steuerbefehle generiert und an Steuergeräte zur optimalen Einstellung der Beschallung, der Beleuchtung sowie der Klimatisierung des Raumes gesendet werden.

4. Verfahren nach einem der vorangegangenen Ansprüche, **dadurch gekennzeichnet, dass** durch Schallpegelmessung ermittelt wird, wie die ermittelte Belegung auf die Beschallung wirkt, dass entsprechend dieser Erfassung ein entsprechendes Preset in der Anlage ausgelöst wird und dass dieses Preset nur die erforderlichen Lautsprecher mit den erforderlichen Eingangsparametern anspricht.

5. Verfahren nach Anspruch 4, **dadurch gekennzeichnet, dass** die Beschallung punktgenau und unter Ausrichtung der Beschallungsanlage auf die Hörenden erfolgt.

6. Verfahren nach Anspruch 4, **dadurch gekennzeichnet, dass** die erstmalige Ansteuerung des flexiblen Beschallungssystems und anderer Funktionen über ein interaktives Multitouchsystem erfolgt.

7. Verfahren nach Anspruch 4, **dadurch gekennzeichnet, dass** eine automatisierte Anpassung der akustischen Parameter in Echtzeit an sich unter üblichen Nutzungsbedingungen ändernde akustisch relevante Einflussfaktoren, wie die Raumbelegung und zwar in Anzahl der Personen und Lokalisierung der Personen und Nutzungsart erfolgt.

8. Anordnung zur Durchführung des Verfahrens nach einem der Ansprüche 1 bis 7, **dadurch gekennzeichnet, dass** diese aus den folgenden Modulen besteht:
- Erfassungsmodul (1), bestehend aus Kamera zur Bilderfassung und Messmikrofon als Pegelmesser,
- Steuereinheit (2) mit den Untermodulen Signalaufbereitungsmodul, digitalem Controler und Bedienmodul,
- Lautsprechersystem (3) mit aktiven und passiven Lautsprechersystemen, Line Arrays und voll elektronischen und manuell einzustellenden Beam Steering Systemen.

9. Anordnung zur Durchführung des Verfahrens nach Anspruch 8, **dadurch gekennzeichnet, dass** der digitale Controler ein Soundprozessor ist.
